# EUROPEAN PATENT APPLICATION

(11) **EP 2 249 301 A1**
(43) Date of publication of application: **10.11.2010**
(21) Application number: 10160455.1
(22) Date of filing: 20.04.2010
(51) Int. Cl.: G06Q 30/00

(54) **Information distribution**

(30) Priority: 27.04.2009 US 386998
(71) Applicant: Sony Corporation, Minato-ku Tokyo 108-0075 (JP); Sony Electronics, Inc., Park Ridge, NJ 07656 (US)
(72) Inventor: Loughery III, Donald L., Long Beach, CA 90803 (US); Frazier, Milton, San Marcos, CA 92069 (US); Rainier, Rajiv, San Diego, CA 92127 (US); Jacobs, Stephen, Ardsley, NY 10022 (US); Noronha, Austin, Sunnyvale, CA 94086 (US); Smith, Tim, Carlsbad, CA 92011 (US)
(74) Representative: Scaddan, Gareth Casey

(57) **Abstract**

A system and method for distributing contextual information in an electronic network includes an information service that is configured to provide information distribution services through said information distribution network.

User devices are provided for device users to communicate with the information service for receiving the information distribution services. A transport structure communicates with network entities in the information distribution network for collecting context metadata. A transport server then performs a context analysis procedure upon the context metadata to responsively generate the contextual information.

## Description

### Field of the Invention

This invention relates generally to information distribution. Embodiments of this invention relate to techniques for distributing electronic information, and relate more particularly to a system and method for distributing contextual information in an electronic network.

### Background of the Invention

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for distributing contextual information in an electronic network are disclosed. In one embodiment, a distribution system automatically provides various types of appropriate information for utilization by device users of corresponding user devices. For example, the distributed information may include, but is not limited to, contextual information and commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, a trusted domain of certain of the device users, and respective advertisers from an information service. In addition, the transport structures may also be utilized to provide links to targeted contextual information, advertisements and/or electronic content to appropriate user devices.

In certain embodiments, one or more transport structures are initially created in any effective manner. For example, the transport structures may be embedded in user devices during manufacture, and then activated by device users. Alternately, an appropriate entity in the distribution system may create or otherwise provide the initial transport structures. Advertiser metadata from one or more advertisers may be added to the transport structures in any effective manner to represent relevant characteristics and advertising goals of the corresponding advertisers.

In addition, appropriate media files may be created to include information for dissemination to targeted device users through the distribution system. The media files may include any desired information, such as advertisements and/or content items. Next, a device user may perform a registration procedure to subscribe for receiving information from the distribution system. During the registration procedure, the device user typically provides various types of relevant information including, but not limited to, user metadata and device metadata. The transport structures are updated to include the user metadata provided by the device user during the foregoing registration procedure.

In addition, one or more target device users may perform a domain definition procedure to define members of a corresponding trusted domain by utilizing any effective techniques. A transport server or other appropriate entity typically communicates with the target user device(s) by utilizing any effective means. For example, the transport server may utilize one or more transport structures to communicate with the target device users through a corresponding target user device.

Appropriate and relevant context metadata from the target user devices and target device user is then obtained in any effective manner. In certain embodiment, context metadata may include, but is not limited to, information from a user profile and a device profile that collectively describe any desired attributes, preferences, or characteristics related to the target user device or the target device user. For example, context metadata regarding a target device user may include, but is not limited to, information regarding a device user's name, gender, age, religion, hobbies, interests, occupation, marital status, residence, income, Internet browsing history, geographic location, and credit-card transaction records. Similarly, context metadata regarding a target user device may include, but is not limited to, a device type, a device manufacturer, device states, geographic locations, supported device functionalities, and a device configuration.

In certain embodiments, the transport server updates the transport structures to include any relevant context metadata. In accordance with embodiments of the present invention, the transport server or other appropriate entity in distribution system may then analyze the context metadata from by using any appropriate techniques. For example, in certain embodiments, a context manager of the transport server may perform a context analysis procedure by utilizing any effective techniques. In certain embodiments, context manager may analyze the context metadata gathered from a target user device and corresponding target device user in light of certain predefined criteria.

As a result of the foregoing context analysis procedure, the context manager then generates specific relevant contextual information. The transport server transmits the contextual information to the target device user through a corresponding target user device. In certain embodiments, the target device user determines whether to share the received contextual information with peer device users from the predefined trusted domain. If the target device user decides to share the contextual information, then the target user device may transmit the received contextual information to peer user devices in the trusted domain. The process may then continue iteratively collecting and analyzing additional context metadata to produce and transmit new contextual information to appropriate target device users. For at least the foregoing reasons, embodiments of the present invention may therefore provide an improved system and method for distributing contextual information in an electronic network.

### Brief Description of the Drawings

Embodiments of the invention will now be described with reference to the accompanying drawings, throughout which like parts are referred to by like references, and in which:
FIG. 1A is a block diagram of a distribution system, in accordance with one embodiment of the present invention;
FIG. 1B is a block diagram of a trusted domain, in accordance with one embodiment of the present invention;
FIG. 2A is a block diagram for one embodiment of a transport structure;
FIG. 2B is a block diagram for one embodiment of a media file;
FIG. 3 is a block diagram for one embodiment of a user device from FIG. 1A;
FIG. 4 is a block diagram for one embodiment of the user memory from FIG. 3;
FIG. 5 is a block diagram for one embodiment of the information service from FIG. 1A;
FIG. 6A is a block diagram for one embodiment of the transport server from FIG. 5;
FIG. 6B is a block diagram for one embodiment of the transport server memory from FIG. 6A;
FIG. 7 is a block diagram for one embodiment of the ad server from FIG. 5; and
FIGS. 8A-8C are a flowchart of method steps for performing a contextual information distribution procedure, in accordance with one embodiment of the present invention.

### Description of the Example Embodiments

Embodiments of the present invention seek to provide an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

Embodiments of the present invention comprise a system and method for distributing contextual information in an electronic network, and includes an information service that is configured to provide information distribution services through said information distribution network. User devices are provided for device users to communicate with the information service for receiving the information distribution services. A transport structure communicates with network entities in the information distribution network for collecting appropriate context metadata. A transport server then performs a context analysis procedure upon the context metadata to responsively generate the contextual information.

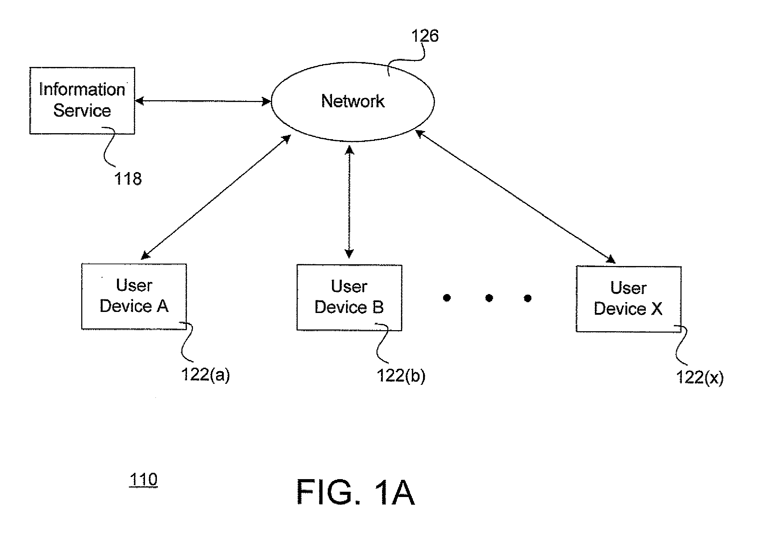

Referring now to FIG. 1A, a block diagram of a distribution system 110 is shown, in accordance with one embodiment of the present invention. In the FIG. 1A embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1A embodiment.

In accordance with embodiments of the present invention, distribution system 110 advantageously supports a distribution procedure that automatically provides various types of appropriate information for utilization by device users of corresponding user devices 122. For example, the distributed information may include, but is not limited to, contextual information and commercial advertising information that is specifically targeted towards appropriate device users of user devices 122. Unlike traditional advertising techniques that support a "pull" model that requires consumers to actively access desired advertising information, the FIG. 1A distribution system 110 supports a "push" model that automatically selects and transmits appropriate advertising information to targeted device users based upon corresponding metadata that defines the device users and the various advertisers, and may also represent one or more trusted domains.

In the FIG. 1A embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

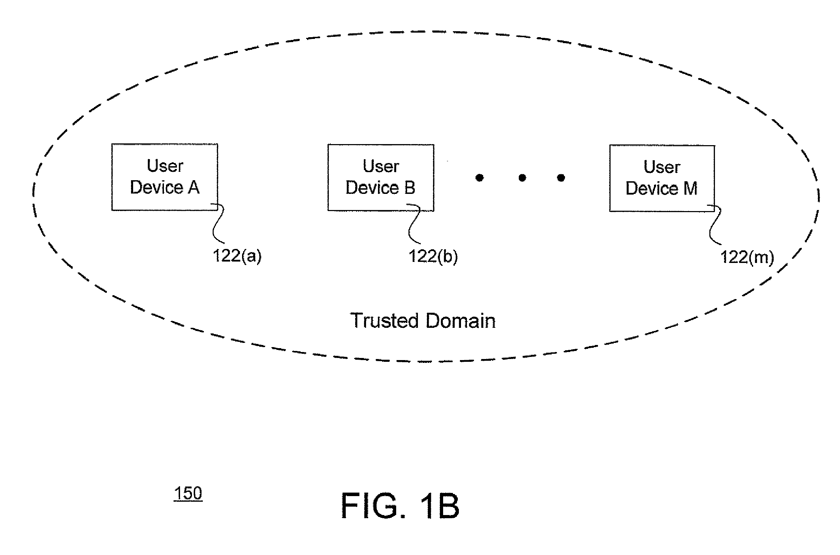

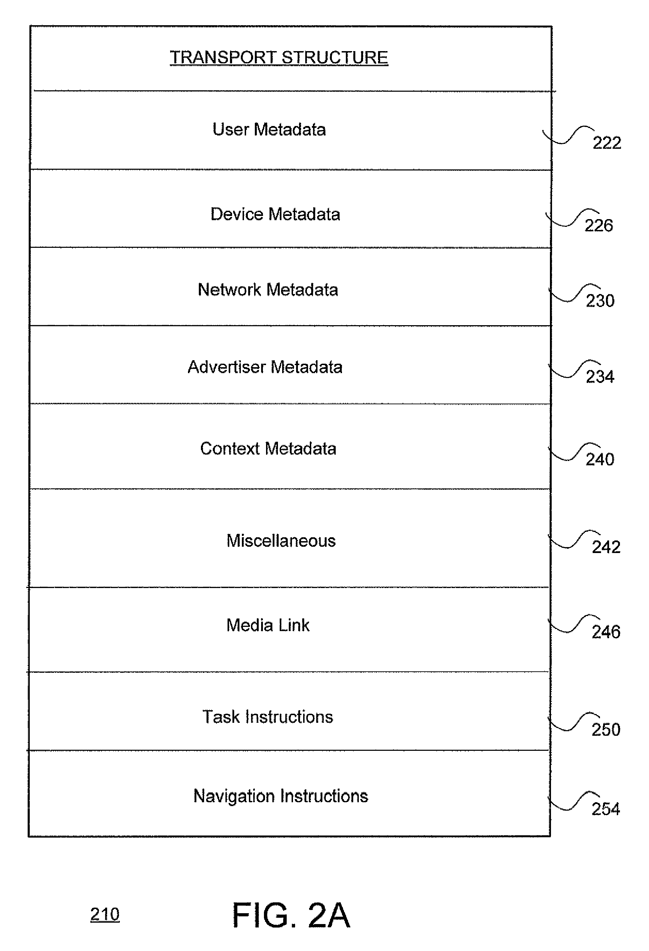

In certain embodiments, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, a trusted domain (see FIG. 1 B), and respective advertisers from information service 118. In addition, the transport structures may also be utilized to transport or provide links to targeted advertisements and/or electronic content for appropriate user devices 122.

In accordance with embodiments of the present invention, relevant context metadata may be collected to reflect current conditions or states for a given target user device or target device user. The context metadata may be analyzed for more accurately providing timely and relevant contextual information to the target device user or target user device. Embodiments of the present invention thus seek to provide an improved system and method for performing a contextual information distribution procedure. Further details regarding the implementation and utilization of transport structures in the FIG. 1A distribution system 110 are discussed below in conjunction with FIGS. 1B-8C.

Referring now to FIG. 1B, a block diagram of a trusted domain 150 is shown, in accordance with one embodiment of the present invention. In the FIG. 1B embodiment, trusted domain 150 may include, but is not limited to, one or more user devices122(a) through 122(m). In FIG. 1B, the user devices 122 may be the same or similar to correspondingly-numbered user devices 122(a) through 122(m) from FIG. 1A. In the FIG. 1B embodiments the various user devices 122 may each perform bi-directional communications with any or all of the other user devices 122 in trusted domain 150 by using any effective communication techniques. For example, the user devices 122 may communicate by utilizing peer-to-peer techniques or personal area network (PAN) technology.

The FIG. 1B trusted domain 150 is presented for purposes of illustration, and in alternate embodiments, trusted domain 150 may be implemented by utilizing components and configurations in addition to, or instead of, certain of those components and configurations discussed in conjunction with the FIG. 1B embodiment. For example, any desired number or type of user devices 122 may be utilized by corresponding device users to form trusted domain 150. In the FIG. 1B embodiment, trusted domain 150 may be defined or created by utilizing any effective techniques. In certain embodiments, a given target device user may utilize a corresponding user device 122 to expressly identify members of a respective trusted domain 150 that corresponds to the target device user.

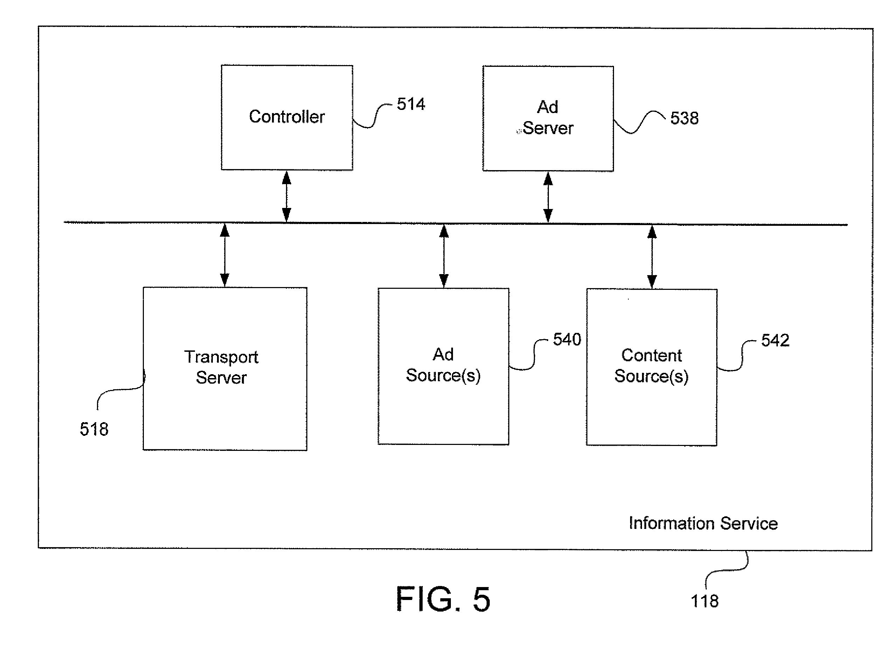

In the embodiments of FIGS. 1A and 1B, a transport server (FIG. 5) or other entity from information service 118 may process and analyze collected context information from the target device user or the corresponding user device 122. The transport server may then distribute contextual information, advertisements or device-related information to the target device user through a network of devices 122 operating within the user's trusted domain 150 that includes peer devices 122 that the target device user has identified as authorized 'transreceivers' of the contextual information.

In certain embodiments, the transport server should be intelligent enough to generate contextual information or announcements related to the needs of the target user device 122 or the target device user by interacting with the network of peer devices 122 within the user's trusted domain 150. The advertisements and relevant contextual information may be distributed, for example, through a peer to peer (P2P) or personal area network (PAN).

Embodiments of the present invention seek to provide a system that will receive, evaluate, contextualize, process, and distribute context metadata, location-based information, network connectivity parameters, and device profiles. Digital messages including, but not limited to, programming information, application data, and audio or video advertisements based on the device profile and relevant information may be generated by this system and distributed to the network of peer devices 122 operating within the user's trusted domain 150.

The target device user benefits by receiving personalized and contextual information that is catered to the needs of the target device user or the target user device 122. For example, a digital camera could alert a target device user to change the battery of the camera by wirelessly transmitting a message about the state of the battery and where the target device user can purchase a new battery. The delivered advertisement may advantageously take into account, for example, the target device user's profile, preferences, and geographical location.

Referring now to FIG. 2A, a block diagram for one embodiment of a transport structure 210 is shown. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

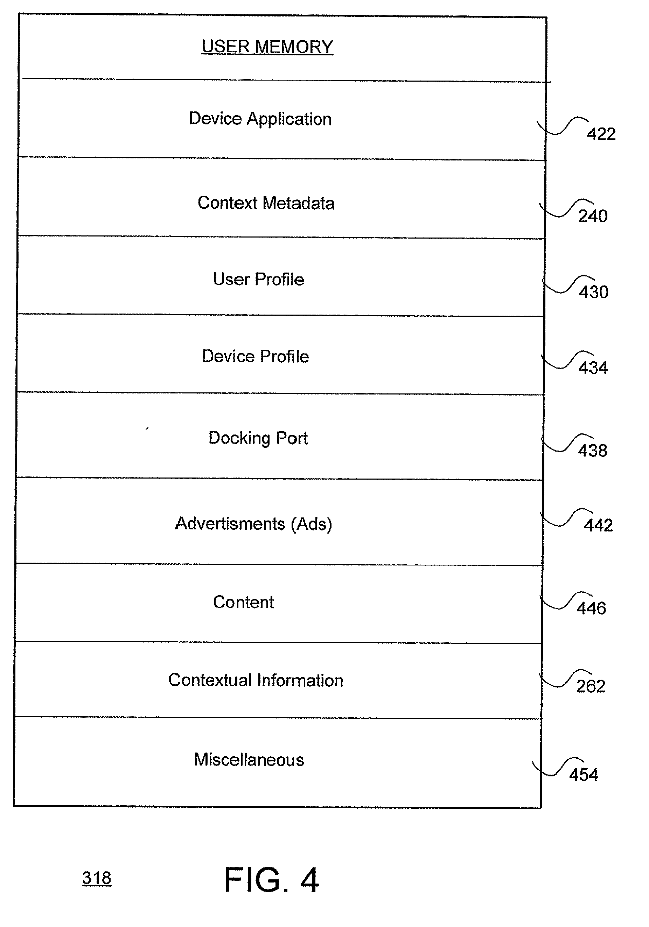

In the FIG. 2A embodiment, each of the metadata categories/fields includes information from one or more devices or entities from respective corresponding metadata-source types. For example, user metadata 222 may include information regarding one or more device users of user devices 122 (FIG. 1A). In certain embodiments, user metadata 222 may be selectively compiled from one or more appropriate user profiles 430 (FIG. 4). Similarly, device metadata 226 may include information regarding one or more user devices 122. In certain embodiments, device metadata 226 may be selectively compiled from one or more appropriate device profiles 434 (FIG. 4). In the FIG. 2A embodiment, network metadata 230 may include information regarding various attributes or entities of electronic network 126 (FIG. 1A).

In the FIG. 2A embodiment, advertiser metadata 234 may include information regarding one or more advertisers that are associated with distribution system 110. In certain embodiments, the advertisers may be associated with ad sources 540 (FIG. 5). Similarly, content renderer metadata 238 may include information regarding one or more content renderers that are associated with distribution system 110. In certain embodiments, the content renderers may be associated with content sources 542 (FIG. 5).

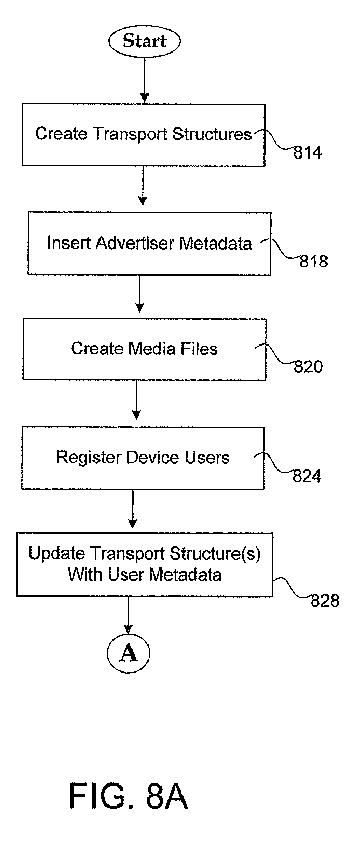

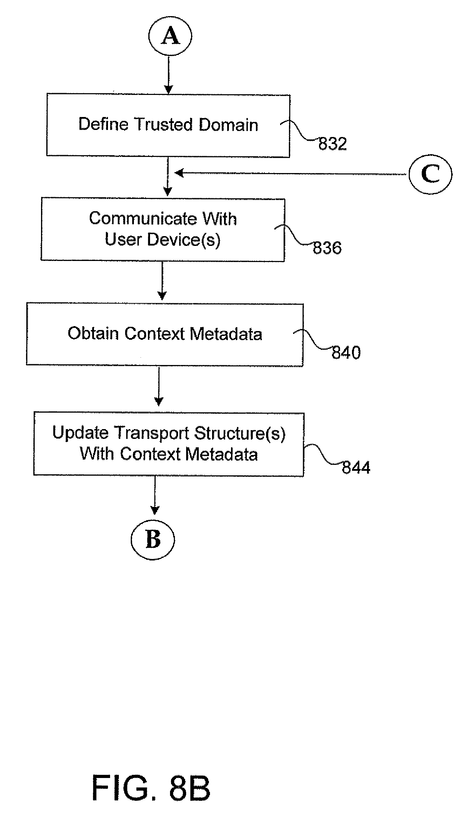

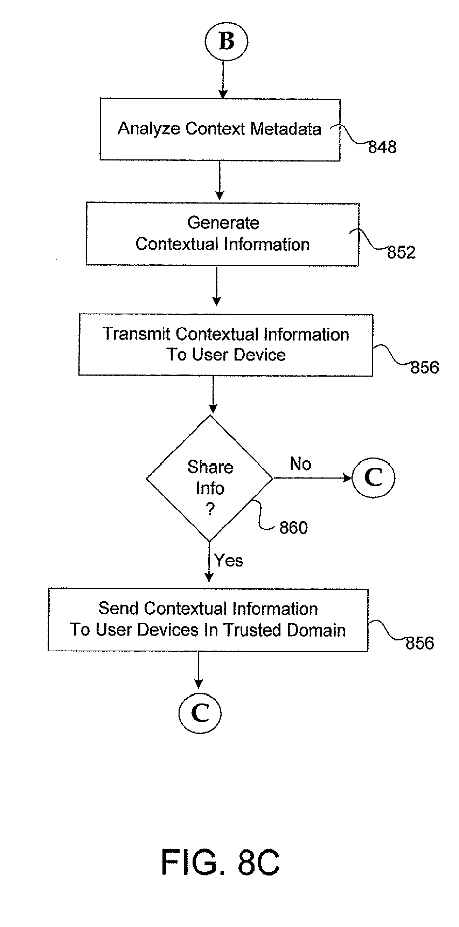

In the FIG. 2A embodiment, context metadata 240 may include information regarding one or more target devices users or target user devices 122 that are associated with distribution system 110. Context metadata 240 may include any relevant information. For example, context metadata 240 may include information regarding current conditions, states, or characteristics of anything related to distribution system 110. In certain embodiments, context metadata 240 may include, but is not limited to, geographic locations, user device states, network parameters, or device user preferences or behaviors. The utilization of context metadata 240 is further discussed below in conjunction with FIG. 8.

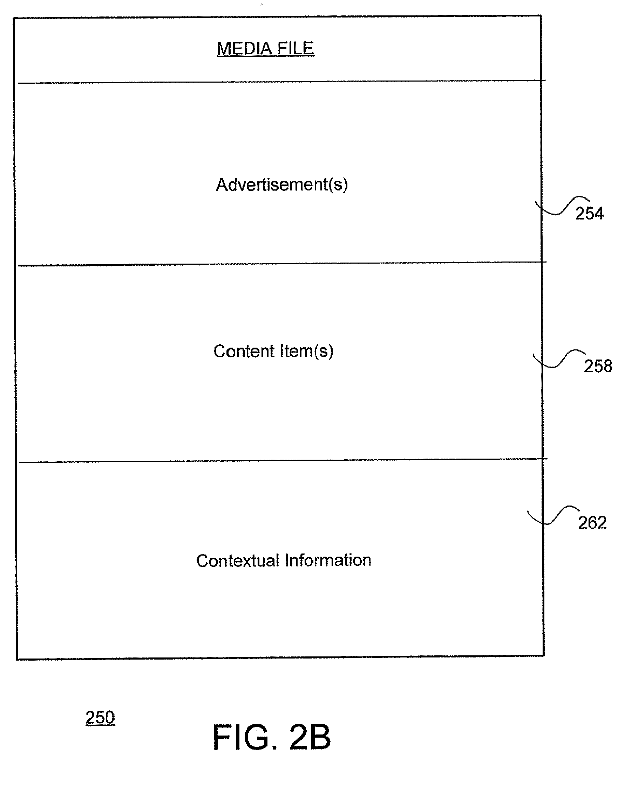

Miscellaneous information 942 may include any additional data or other appropriate information. Media link 246 may include appropriate information to indicate a location or a connection means for accessing one or more media files, as discussed below in conjunction with FIG. 2B. In the FIG. 2A embodiment, task instructions 250 may include any appropriate instructions or other information that indicate specific tasks, operations, functions, or steps for performance by transport structure 210. For example, in certain embodiments, task instructions 250 may include detailed instructions describing the type of information that transport structure 210 is directed to collect and/or distribute. In the FIG. 2A embodiment, navigation instructions 254 may include any appropriate instructions or other information that provide specific navigational directions or limitations for transport structure 210. For example, in certain embodiments, navigation instructions 216 may define at least one navigation path that is defined by one or more origin points and one or more destination points.

Various entities in distribution system 110 may utilize the information in transport structure 210 in any appropriate manner. For example, a contextual information targeting procedure may be performed by matching compatible elements of user metadata 922, device metadata 926, advertiser metadata 934, and context metadata 240 to thereby identify appropriate types of relevant contextual information for automatic transmission to targeted device users.

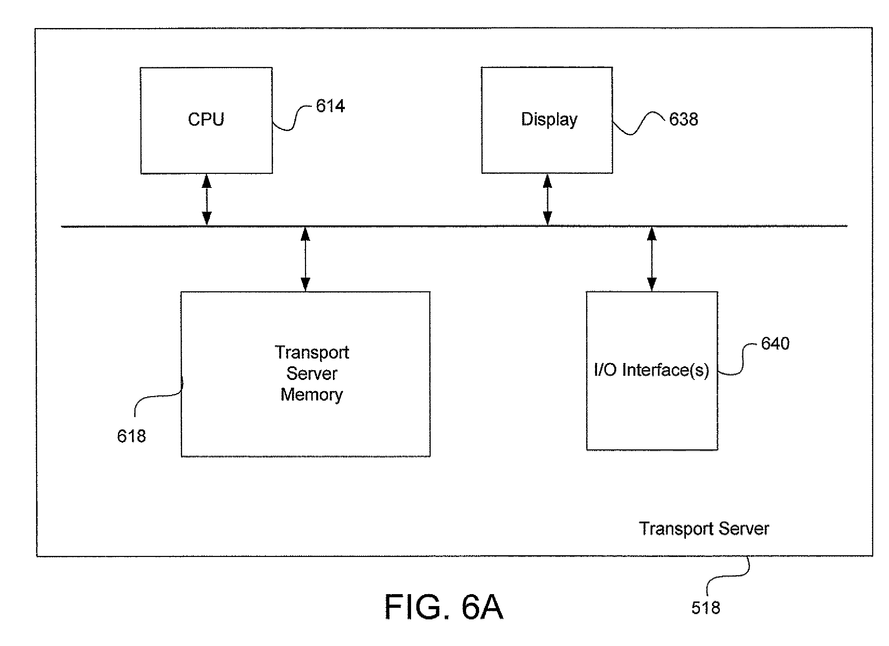

Transport structures 210 may be originated in any effective manner from any appropriate source. For example, transport structures 210 may be embedded in user devices 122 (FIG. 1A), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-8C.

Referring now to FIG. 2B, a block diagram for one embodiment of a media file 250 is shown. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

In the FIG. 2B embodiment, advertisements (ads) 254 may include any appropriate type of targeted advertising information that has been selected for transmission to appropriate ones of the user devices 122 (FIG. 1A). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs.

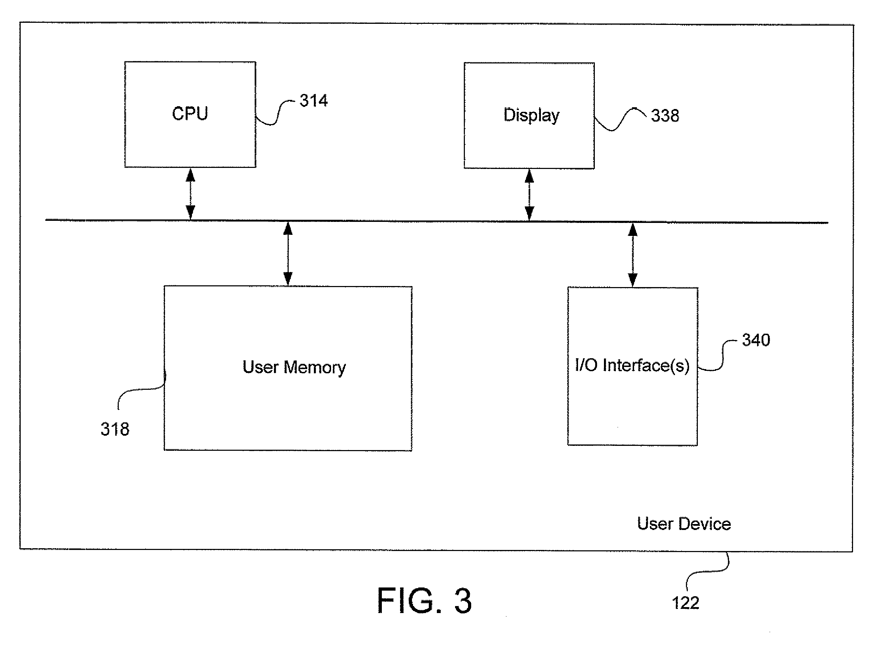

In the FIG. 2B embodiment, contextual information 264 may include any appropriate type of information or data. For example, contextual information 264 may include, but is not limited to, warning messages, user prompt messages, requests for information, status reports, suggestions for device users, supplementary information, purchasing alternatives, time-sensitive information, device-related technical data, statistics, and information related to current geographic locations. Further information for providing appropriate media files 250 to targeted device users is further discussed below in conjunction with FIGS. 3-8C.

Referring now to FIG. 3, a block diagram for one embodiment of a FIG. 1A user device 122 is shown. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-8C.

Referring now to FIG. 4, a block diagram for one embodiment of the FIG. 3 user memory 318 is shown. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122.

In the FIG. 4 embodiment, user device 122 utilizes device application 422 to manage context metadata, 426, a user profile 430, a device profile 434 that collectively describe any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, and a device configuration.

In addition, context metadata 240 may include any information regarding the devices user and an associated user device 122. For example, context metadata 240 may include, but is not limited to,1 information regarding current conditions, states, or characteristics of anything that is related to the device user, user device 122, or other entities or functionalities in distribution system 110. In certain embodiments, context metadata 240 may include, but is not limited to, geographic locations, user device states, network parameters, or device user preferences or behaviors.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1A) specifically for a device user of user device 122. Similarly, content 446 may include targeted electronic content information that has been received via distribution system 110 (FIG. 1A) specifically for a device user of user device 122.

In the FIG. 4 embodiment, contextual information 262 may include may include any appropriate type of information or data. For example, contextual information 262 may include, but is not limited to, warning messages, user prompt messages, requests for information, status reports, suggestions for device users, supplementary information, purchasing alternatives, time-sensitive information, device-related technical data, statistics, and information related to current geographic locations.

In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-8C.

Referring now to FIG. 5, a block diagram for one embodiment of the FIG. 1A information service 118 is shown. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2A). Additional details regarding the implementation and utilization of transport server 518 are further discussed below in conjunction with FIG. 6A. In the FIG. 5 embodiment, ad source(s) 540 may include one or more appropriate entities for providing advertisement information for dissemination through distribution system 110 (FIG. 1A). For example, ad sources 540 may include various commercial enterprises, specific advertisers, or advertising developers.

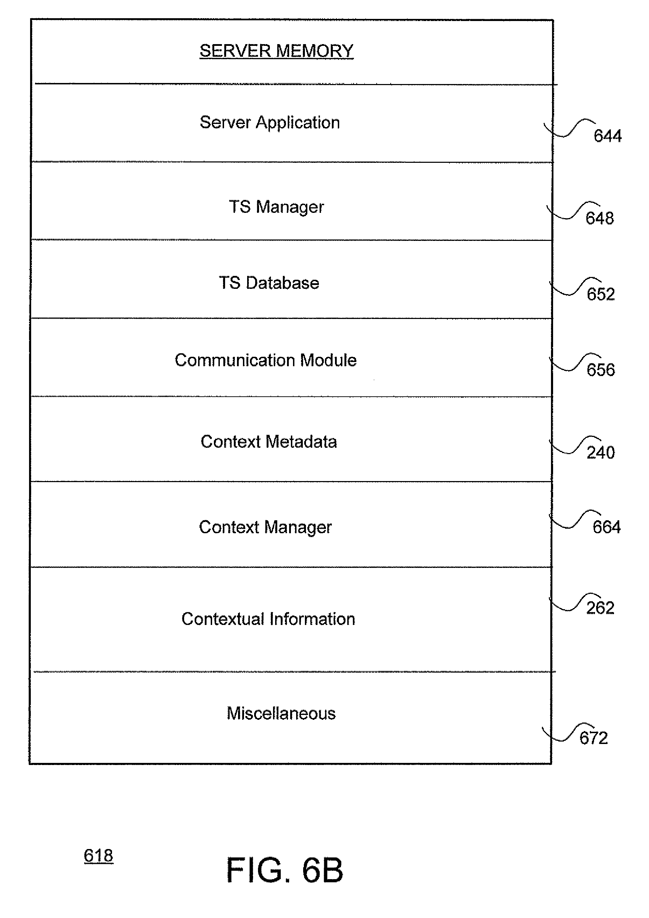

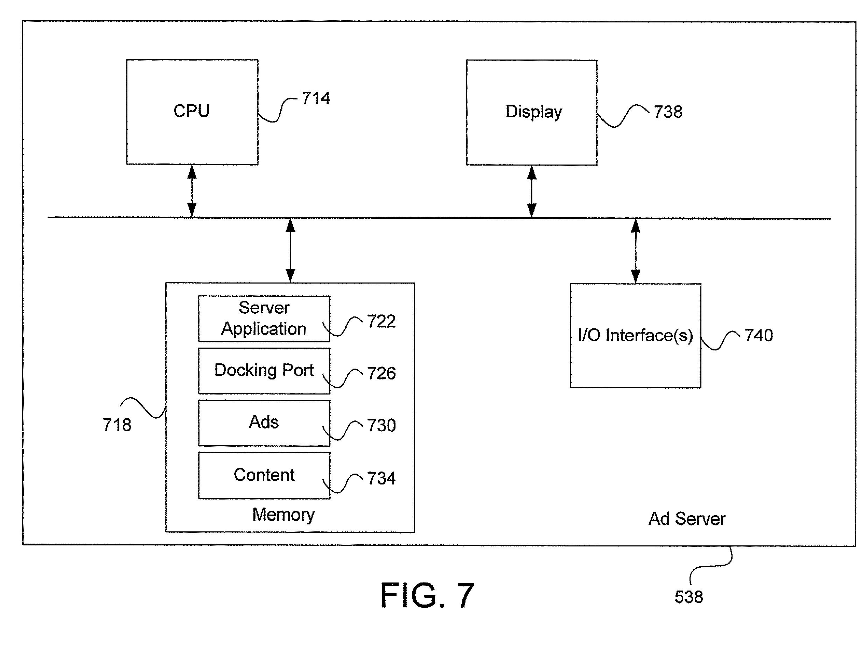

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1A) by utilizing metadata from one or more transport structures 210 (FIG. 2A). One embodiment of ad server 538 is further discussed below in conjunction with FIG. 7. Additional details for the implementation and utilization of information service 118 are further discussed below in conjunction with FIGS. 6-8C.

Referring now to FIG. 6A, a block diagram for one embodiment of the transport server 518 of FIG. 5 is shown. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

Referring now to FIG. 6B, a block diagram for one embodiment of the FIG. 6A transport server memory 618 is shown. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A). In certain embodiments, the TS manager 648 may include a registration module for coordinating registration procedures to register device users of user devices 122 for participating in various authorized distribution services from distribution system 110 (FIG. 1A). The registration module may also be utilized to define a trusted domain 150 (FIG. 1B), as previously discussed. A TS database 652 may include any appropriate information regarding the transport structures 210 that provide distribution services to various entities in distribution system 110.

In certain embodiments, the TS manager 648 may continually update respective transport structure information in the TS database 652 to reflect the current status of transport structures 210 in distribution system 110. The transport server 518 may utilize a communication module 656 to perform bi-directional electronic communication procedures with any appropriate remote entity. For example, the communication module 656 may be utilized to remotely communicate with transport structures 210 in distribution system 110.

In the FIG. 6B embodiment, context metadata 240 may include information regarding one or more target devices users that are associated with distribution system 110. Context metadata 240 may include any relevant type of information. For example, context metadata 240 may include information regarding current conditions, states, or characteristics of anything related to distribution system 110. In certain embodiments, context metadata 240 may include, but is not limited to, geographic locations, user device states, network parameters, or device user preferences or behaviors.

In the FIG. 6B embodiment, context manager 664 may perform a context analysis procedure by utilizing any effective techniques to produce corresponding contextual information 262 to be sent to one or more appropriate target device users. For example, in certain embodiments, context manager 664 may analyze context metadata 240 gathered from a target user device 122 and corresponding target device user in light of certain predefined criteria to identify specific relevant contextual information 262. In addition, predefined transmission thresholds may be defined to specify when to send the contextual information 262.

In the FIG. 6B embodiment, contextual information 262 may include any appropriate type of information or data. For example, contextual information 262 may include, but is not limited to, warning messages, user prompt messages, requests for information, status reports, suggestions for device users, supplementary information, purchasing alternatives, time-sensitive information, device-related technical data, statistics, and information related to current geographic locations. In the FIG. 6B embodiment, miscellaneous information 672 may include any desired type of information or data for utilization by transport server 518. The utilization of transport server 518 is further discussed below in conjunction with FIG. 8.

Referring now to FIG. 7, a block diagram for one embodiment of the ad server 538 of FIG. 5 is shown. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze information or instructions from transport server 518 or transport structures 210 to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2) to transfer ads 730, content 734, or any other types of information. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

Referring now to FIGS. 8A-8C, a flowchart of method steps for performing a contextual information distribution procedure is shown, in accordance with one embodiment of the present invention. The FIG. 8 flowchart is presented for purposes of illustration, and in alternate embodiments, the present invention may utilize steps and sequences other than those steps and sequences discussed in conjunction with the FIG. 8 embodiment.

In step 814 of FIG. 8A, one or more transport structures 210 (FIG. 2A) are initially created in any effective manner. For example, transport structures 210 may be embedded in user devices 122 during manufacture, and then activated by device users. Alternately, an appropriate entity (such as a transport server 518) in a distribution system 110 may create or otherwise provide the initial transport structures 210. In step 818, advertiser metadata 234 from one or more advertisers 814 may be added to the transport structures 210 in any desired manner to represent relevant characteristics and advertising goals of the corresponding advertisers 814.

In step 820, appropriate media files 250 may be created to include information for dissemination to targeted device users through distribution system 110. The media files 250 may include any desired information, such as advertisements 254 and/or content items 258. In step 824, a device user performs a registration procedure to receive information from the distribution system 110. During the registration procedure, the device user typically provides relevant information including, but not limited to, user metadata 222 and device metadata 226. In step 828, the transport structures 210 are updated to include the metadata provided by the device user during the foregoing registration procedure. The FIG. 8A process then advances to step 832 of FIG. 8B through connecting letter "A."

In step 832, one or more target device users perform a domain definition procedure to define members of a corresponding trusted domain 150 by utilizing any effective techniques. In step 836, transport server 518 or another appropriate entity communicates with the target user device(s) 122 by utilizing any effective means. For example, transport server 518 may utilize one or more transport structures 210 to communicate with the target device users through a corresponding user device 122.

In step 840, appropriate and relevant context metadata 240 from the target user devices 122 and target device user is obtained in any effective manner. In the FIG. 8 embodiment, context metadata 240 may include, but is not limited to, information from a user profile 430 and a device profile 434 that collectively describe any desired attributes, preferences, or characteristics related to target user device 122 or a target device user of target user device 122. For example, user profile 430 may include, but is not limited to, information regarding a device user's name, gender, age, religion, hobbies, interests, occupation, marital status, residence, income, Internet browsing history, geographic location, and credit-card transaction records. Similarly, device profile 434 may include, but is not limited to, a device type, a device manufacturer, supported device functionalities, device states, and a device configuration.

In step 844, the transport server 518 updates the transport structures 210 to include any relevant context metadata 240. The FIG. 8B process then advances to step 848 of FIG. 8C through connecting letter "B." In step 848, the transport server 518 or other appropriate entity in distribution system 110 analyzes the context metadata 240 from the target user device 122 by using any appropriate techniques. For example, in certain embodiments, a context manager 664 of transport server 518 may perform a context analysis procedure by utilizing any effective techniques. In certain embodiments, context manager 664 analyzes context metadata 240 gathered from a target user device 122 and corresponding target device user in light of certain predefined criteria.

As a result of the foregoing context analysis procedure, in step 852, context manager 664 then generates specific relevant contextual information 262. In step 856, transport server 518 transmits the contextual information 262 to the target device user through the corresponding target user device 122. In step 860, the target device user determines whether to share the received contextual information 262 with peer device users from the trusted domain 150. If the target device user decides not to share the contextual information 262, then the FIG. 8C process returns to step 836 of FIG. 8B through connecting letter "C."

However, if the target device user decides to share the contextual information 262, then in step 856, the target user device 122 transmits the contextual information 262 to peer user devices 122 in the trusted domain 150. The FIG. 8C process may then return to step 836 of FIG. 8B through connecting letter "C" to continue iteratively collecting and analyzing context metadata 240 to produce and transmit contextual information 262 to appropriate target device users. For at least the foregoing reasons, embodiments of the present invention may therefore provide an improved system and method for distributing contextual information in an electronic network.

The invention has been explained above with reference to certain embodiments. Other embodiments will be apparent to those skilled in the art in light of this disclosure. For example, embodiments of the present invention may readily be implemented using certain configurations and techniques other than those described in the specific embodiments above. Additionally, embodiments of the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for implementing an information distribution network, comprising:
an information service that is configured to provide information distribution services
through said information distribution network;
user devices that device users utilize to communicate with said information service for
receiving said information distribution services;
a transport structure that communicates with network entities in said information
distribution network, said transport structure collecting context metadata for providing contextual information from said information service to a target user device; and
a transport server that performs a context analysis procedure upon said context metadata
to responsively generate said contextual information.

2. The system of claim 1 wherein said transport server transmits said contextual information to said target user device by utilizing said transport structure.

3. The system of claim 1 wherein a subset of said device users are defined by a target device user of said target user device as peer members of a trusted domain with corresponding peer user devices from among said user devices.

4. The system of claim 1 wherein said contextual information includes warning messages, user prompt messages, requests for information, status reports, suggestions for device users, supplementary information, purchasing alternatives, time-sensitive information, device-related technical data, statistics, and information related to current geographic locations.

5. The system of claim 1 wherein said context metadata includes geographic locations, user device states, network parameters, and device user preferences.

6. The system of claim 1 wherein said transport structure includes a media link to a media file that contains said contextual information, advertising information, and electronic content, said transport structure moving through said information distribution network to collect said context metadata, said transport structure also providing media links for said contextual information to said target user device.

7. The system of claim 1 wherein said information service utilizes a push technique to automatically select and transmit only said contextual information that is relevant to a target device user of said target user device in light of specific characteristics from said context metadata, said selected information being targeted to said target device user and said target user device by evaluating said metadata with reference to one or more predefined criteria.

8. The system of claim 1 wherein said transport structure includes user metadata, device metadata, network metadata, advertiser metadata, content renderer metadata, said context metadata, and one or more media links to said contextual information.

9. The system of claim 1 wherein said device users perform a registration procedure with said information service to participate in said information distribution services, said device users providing user metadata to said information service during said registration procedure, said registration procedure also being utilized to define members of a trusted domain of said user devices.

10. The system of claim 1 wherein a target device user of said target user device defines a trusted domain of peer device users and corresponding peer user devices, said target device user determining whether to share said contextual information with said peer device users, said target device user utilizing said target user device to share said contextual information with said peer device users by utilizing peer-to-peer communication techniques.

11. An electronic device for utilizing an information distribution network, comprising:
a device application that device users utilize to communicate with an information service
for receiving information distribution services through said information distribution network;
a transport structure that communicates with network entities in said information
distribution network, said transport structure collecting context metadata that a transport server utilizes to perform a context analysis procedure for generating said contextual information that is then provided to said electronic device; and
a processor for controlling said device application and said transport structure.

12. The electronic device of claim 11 wherein said transport server transmits said contextual information to said electronic device by utilizing said transport structure.

13. The electronic device of claim 11 wherein a subset of trusted device users in said information distribution network are defined by a device user of said electronic device as peer members of a trusted domain with corresponding peer user devices.

14. The electronic device of claim 11 wherein said contextual information includes warning messages, user prompt messages, requests for information, status reports, suggestions for device users, supplementary information, purchasing alternatives, time-sensitive information, device-related technical data, statistics, and information related to current geographic locations.

15. The electronic device of claim 11 wherein said context metadata includes geographic locations, user device states, network parameters, and device user preferences.
